**Europäisches Patentamt**

**European Patent Office**

**Office européen des brevets**

(11) Veröffentlichungsnummer: **0 008 104**
**A1**

## (12) EUROPÄISCHE PATENTANMELDUNG

(21) Anmeldenummer: **79102825.1**

(22) Anmeldetag: **06.08.79**

(51) Int. Cl.³: **G 01 S 17/32, G 01 S 17/58**

---

(30) Priorität: **10.08.78 DE 2834954**

(43) Veröffentlichungstag der Anmeldung: **20.02.80**
**Patentblatt 80/4**

(84) Benannte Vertragsstaaten: **CH DE FR GB**

(71) Anmelder: **HONEYWELL GMBH, Kaiserleistrasse 55, D-6050 Offenbach am Main (DE)**

(72) Erfinder: **Holzapfel, Wolfgang, Dr.-Ing., Kilianstädter Strasse 13, D-6454 Bruchköbel (DE)**

(74) Vertreter: **Rentzsch, Heinz et al, Honeywell Europe S.A. Holding KG Kaiserleistrasse 55, D-6050 Offenbach am Main (DE)**

---

(54) **Entfernungs- und Geschwindigkeitsmesseinrichtung mit rauschfrequenzmoduliertem Sender.**

(57) Zur Schaffung eines hochauflösenden Laser-Entfernungsmessers wird das vom sogenannten Horton-Höhenmesser aus der Mikrowellentechnik bekannte Verfahren, die Senderfrequenz durch das Signal eines Rauschgenerators (7) zu modulieren, eingesetzt, indem der Laserstrahl entweder innerhalb oder außerhalb des Laserresonators (2, 3, 4) stochastisch phasenmoduliert wird. Auf der Empfangsseite erfolgt eine optische Korrelation (14) des reflektierten Zielstrahls mit einem Bezugsstrahl, der entweder unmittelbar aus dem Senderstrahl abgeleitet ist oder von einem Bezugsoszillator geliefert wird. Durch Mittelwertbildung der Differenzfrequenz wird ein der Zielentfernung proportionales Signal erzeugt, ferner liefert das System für die Geschwindigkeitsmessung ein elektrisches Signal für die optische Doppelfrequenzverschiebung.

0008104

HONEYWELL GmbH
Kaiserleistr.55

D6o5o Offenbach am Main

3. August 1979
07-0387 EP
HR/umw

Entfernungs-und Geschwindigkeitsmeßeinrichtung mit rauschfrequenzmoduliertem
Sender

Die Erfindung geht aus von einer Entfernungsmeßeinrichtung nach dem Gattungsbegriff des Anspruchs 1. In den
Druckschriften (1) und (2) ist (vergleiche Literaturverzeichnis am Schluß der Beschreibung) ein Flugzeug-
Funkhöhenmesser beschrieben, dessen senderseitiger Frequenzmodulator über ein RC-Formfilter durch einen Rauschgenerator gesteuert wird und an dessen empfängerseitiger
Mischstufe über einen NF-Verstärker ein Begrenzer mit
nachgeschaltetem linearem Diskriminator angeschlossen ist.
Als Oszillatorspannung für die Mischstufe wird ein Teil
der von der Sendeantenne abgestrahlten Energie unmittelbar und unverzögert von der Empfangsantenne der Mischstufe zugeführt (Homodyn-Empfänger). Eine solche Meßeinrichtung zeichnet sich dadurch aus, daß sie besonders bei
kleinen Entfernungen die größte Empfindlichkeit gegenüber
Entfernungsänderungen aufweist und von den Eigenschaften
der Meßstrecke, insbesondere der Signaldämpfung, weitgehend
unabhängig ist.

Aufgabe der Erfindung ist es, eine Entfernungsmeßeinrichtung dieser Art in Richtung auf eine höhere Meßgenauigkeit und Winkelauflösung und eine verbesserte Entfernungsauflösung weiterzuentwickeln. Diese Aufgabe wird gelöst
durch die im Anspruch 1 gekennzeichnete Erfindung. Vorteilhafte Weiterbildungen ergeben sich aus den Unteransprüchen.

-2-

Die Erfindung wird nachfolgend anhand zweier in den
Zeichnungen wiedergegebener Ausführungsbeispiele erläutert. Dabei zeigt

Fig.1 das Blockschaltbild eines Laser-Entfernungsmessers mit außerhalb des Laserresonators
angeordnetem Phasenmodulator und einem
Homodyn-Empfangsteil und

Fig.2 einen Laser-Entfernungsmesser mit innerhalb
des Laserresonators angeordnetem Modulator
und einem Heterodyn-Empfangsteil.

Vorausgeschickt sei, daß die in den beiden Ausführungsbeispielen gewählte Kombination von einerseits resonatorexterner Rauschmodulation und Homodyn-Empfangsteil und andererseits resonatorinterner Rauschmodulation und Heterodyn-Empfangsteil keineswegs zwingend ist sondern
auch andere Kombinationen hinsichtlich der Anordnung des
Modulators und der Ausbildung des Empfängers möglich und
unter bestimmten Bedingungen besonders vorteilhaft sind.

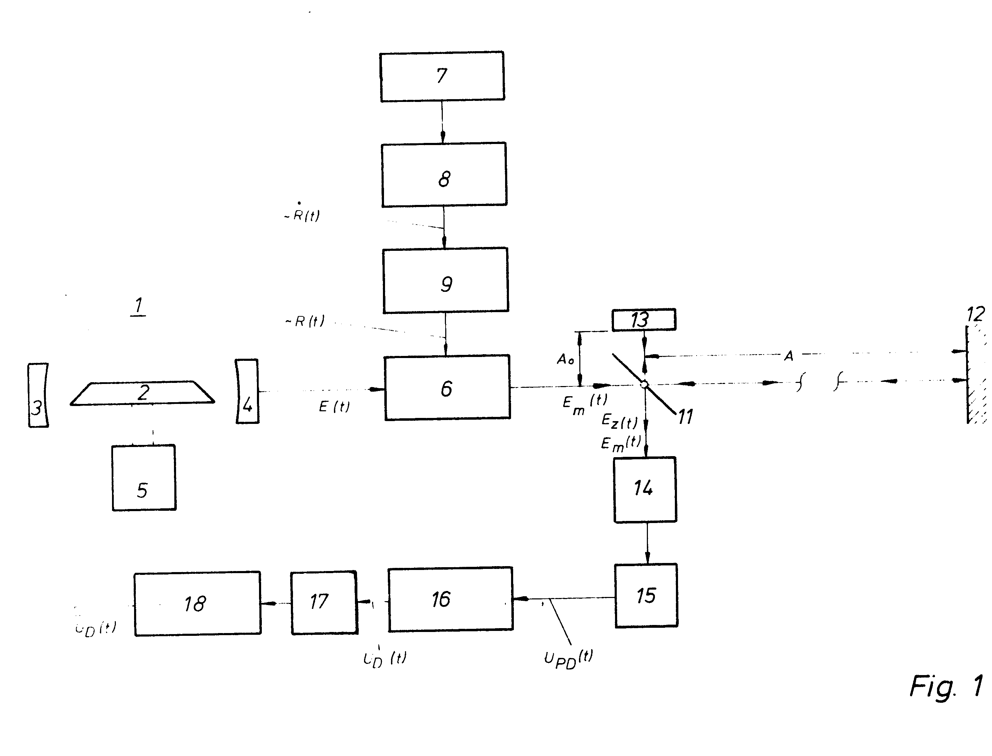

In Fig.1 ist schematisch ein Laseroszillator 1 dargestellt, der aus einem Laserverstärker 2 zwei Reflektoren 3 und 4 sowie einer Vorrichtung 5 zum Anregen des Laserverstärkers 2 im Resonator 3,4 besteht. Die erzeugte
Laserstrahlung E(t) gelangt zu einem externen Phasenmodulator 6 und wird dort rauschmoduliert. Hierzu ist ein
Rauschgenerator 7 über ein Formfilter 8 und einen Integrator 9 an den Modulationseingang des Phasenmodulators
6 angeschlossen. Hinsichtlich der Modulationstechnik bieten sich mehrere Möglichkeiten, z.B.:

a) der lineare transversale oder longitudinale
elektrooptische Effekt, (Pockelszelle), der
an bestimmten Kristallen ($NH_4 H_2 PO_4$, $KH_2 PO_4$,
$KD_2 PO_4$ u.a.) beobachtet wird, sowie der quadratische elektrooptische Effekt (Kerreffekt),
der bei Flüssigkeiten (z.B.Nitrobenzol) oder Kristallen auftreten kann;

b) die Modulation der geometrischen Resonatorlänge, z.B. durch Steuerung des Abstandes
der Laserspiegel mit Hilfe piezoelektrischer
Wandler;

c) der akustische-optische Effekt, d.h. die Beeinflussung des Brechungsindex von Flüssigkeiten durch Ultraschallwellen (Braggzelle);

d) der manetooptische Effekt (Brechungsindexänderung von optisch transparenten Materialien unter dem Einfluß magnetischer Felder);

e) der photoelastische Effekt, d.h. die Änderung
des Brechungsindex von Gläsern und Kristallen
proportional zu einer einwirkenden Druckkraft;

f) der Zeemaneffekt sowie der Starkeffekt, d.h.
die Einwirkung von elektrischen oder magnetischen Feldern auf das laseraktive Medium
und als Folge eine Aufspaltung und Verstimmung
der atomaren Resonanzfrequenz des Laserüberganges.

Der phasenmodulierte Laserstrahl $E_m$ (t) durchläuft einen
Strahlenteilerspiegel 11 und wird von dem im Abstand A
befindlichen Ziel 12 zum Spiegel 11 hin reflektiert. Der
Spiegel 11 lenkt den reflektierten Strahl zu einem weiteren Reflektor 13 ab, der im Abstand $A_o$ vom Spiegel angeordnet ist. Der Reflektor 13 wirft den Meßstrahl $E_z$ (t)
auf einen Photodetektor 14, wo er mit einem vom teildurchlässigen Spiegel 11 aus dem phasenmodulierten Laserstrahl
abgeleiteten Signal $E_m$ (t) optisch überlagert wird. Diese
Überlagerung des Meßsignals mit einem unmittelbar aus dem

-4-

Sendesignal abgeleiteten Signal wird als Homodyn-Prinzip bezeichnet. An den Photodetektor 14 ist über einen Breitbandverstärker 15 ein Frequenzdiskriminator 16 angeschlossen, der das verstärkte Ausgangssignal $U_{PD}$ (t) des Photodetektors erhält und ein frequenzabhängiges Ausgangssignal $U_D$ (t) an einen Tiefpaß 17 liefert, der beispielsweise eine Grenzfrequenz von 1o Hz hat. An den Tiefpaß 17 ist eine Schaltungsanordnung 18 zur Bildung des Mittelwerts $\overline{|U_D(t)|}$ angeschlossen.

Es wird vorausgesetzt, daß der Laseroszillator 1 im Dauerstrich-Betrieb eine longitudinale Wellenform $TEM_{OOq}$ mit der (mittleren) Signalfrequenz $\Omega_o = 2\pi \nu_o$ abgestrahlt. Die elektrische Feldstärke des Lasersignals, dessen Wellenfront über dem Strahlquerschnitt als eben vorausgesetzt wird, ist dann

$$E (t,z) = E_O \cos \left[ kz + \Omega_o t + \Theta(t) \right] \qquad (I)$$

$\Theta$ (t) ist dabei der Momentanwert der Phase des (amplitudenkonstanten Oszillatorssignals, $k = \Omega_o/c$ die Wellenzahl, und z die Entfernung vom Sendeoszillator in Strahlrichtung.

Der Phasenmodulator 6 wird durch das Rauschsignal $\sim R$ (t) mit einer durch ein Formfilter vorgegebenen spektralen Verteilung gesteuert und prägt dem optischen Signalstrahl ein künstliches Phasenrauschen auf. Es wird hier angenommen, daß die stochastischen Größen $\dot{\Theta}$ (t) und $\dot{R}$ (t) Repräsentanten stationärer und ergodischer Prozesse mit verschwindendem Mittelwert sind. Insbesondere möge $\dot{R}$ (t) bzw. R (t) eine Normalverteilung besitzen, was durch eine entsprechende Wahl des modulierenden Rauschgenerators erreicht werden kann.

Ein Teil $E_m$ (t,z) des modulierten Signals wird durch den Strahlteiler 11 direkt auf den Photodetektor 14 gerichtet

-5-

und überlagert sich hier optisch mit dem vom Ziel 12 reflektierten Signalanteil $E_z$ (t,z). Am Ausgang des Photomischers 14 tritt dann ein elektrisches Signal $U_{PD}$ mit gleichfalls stochastisch schwankender Frequenz auf.

Für die elektrischen Feldstärken in der Empfangsfläche des Photodetektors gilt:

$$E_m(t) = E_m \cos \left[ \Omega_o t + \Theta(t) + R(t) + k\ z_m \right] \quad (II)$$

$$E_z(t) = E_z \cos \left[ \Omega_o t + \Theta(t - \tau) + R(t - \tau) + k z_z \right] \quad (III)$$

wobei $z_m$, $z_z$ die optischen Weglängen der jeweiligen Strahlkomponente und $\tau$ die zusätzliche Laufzeit des Zielsignals ist.

In Gl. III wird ein ideal ungestörter Übertragungskanal für den Zielstrahl vorausgesetzt, d.h. eine zusätzliche Amplituden- und Phasenmodulation bleibt hier unberücksichtigt.

Das elektrische Signal am Ausgang des Photodetektors 14 ist somit:

$$U_{PD} = \left\{ K_{PD} \ \overline{\tfrac{1}{2} E_m^2} + \overline{\tfrac{1}{2} E_z^2} \right.$$

$$\left. + E_m E_2 \cos \left[ kc\tau + \Theta(t) + R(t) - \Theta(t-\tau) - R(t-\tau) \right] \right\} \quad (IV)$$

Für die momentane Frequenz $\omega_{mz}$ des Mischsignals gilt:

$$\omega_{mz}(t,\tau) = \left| \frac{d}{dt} \left[ \Delta\Theta(t,\tau) + \Delta R(t,\tau) \right] \right| \quad (V)$$

mit

$$\Delta\Theta(t,\tau) = \Theta(t) - \Theta(t-\tau) = \int_{t-\tau}^{t} \dot{\Theta}(t)dt \quad (VI)$$

$$\Delta R(t,\tau) = R(t) - R(t-\tau) = \int_{t-\tau}^{t} \dot{R}(t)dt \quad (VII)$$

bzw. in äquivalenter Darstellung:

$$\omega_{mz}(t, \tau) = \left| \omega_m(t) - \omega_z(t) \right| \qquad \text{(VIII)}$$

mit

$$\omega_m(t) = \dot{\Theta}(t) + \dot{R}(t) \qquad \text{(IX)}$$

$$\omega_z(t) = \omega_m(t-\tau) = \dot{\Theta}(t-\tau) + R(t-\tau) \ . \qquad \text{(X)}$$

wobei $\omega_m$, $\omega_z$ die momentanen Frequenzabweichungen des Modulator- bzw. Zielstrahles von der (mittleren) Signalfrequenz $\Omega_o$ des Laserlichtes sind. Dabei gilt:

$$E_m(t) = E_m \cos\left[\Omega_o t + \int \omega_m(t)dt\right] \quad \text{und}$$

$$E_z(t) = E_z \cos\left[\Omega_o t + \int \omega_z(t)dt\right] \qquad \text{(XI)}$$

Da die frequenzmodulierten Signale $\dot{R}(t)$, $\dot{\Theta}(t)$ - wie vorausgesetzt - statistische Verteilung mit dem Mittelwert $\overline{\dot{R}} = \overline{\dot{\Theta}} = 0$ besitzen, verschwindet auch der zeitliche Mittelwert der monentanen Frequenzabweichung

$$\overline{\omega_m(t)} = \lim_{T \to \infty} \frac{1}{2T} \int_{-T}^{T} \omega(t)dt \ \dot{=} \ 0 \qquad \text{(XII)}$$

und für die Streuung $\sigma_{\omega_m}^2$ der Frequenzabweichungen gilt

$$\sigma_{\omega_m}^2 = \overline{\left[\omega_m(t)\right]^2} \qquad \text{(XIII)}$$

Entsprechende Aussagen gelten auch für die statistischen Verteilungen der Signalfrequenzen

$$\omega_z(t) = \omega_m(t-\tau) \quad \text{und} \quad \omega_m(t, \tau) = \omega_m(t) - \omega_m(t-\tau).$$

-7-

Der Frequenzdiskriminator 16 liefert als Ausgangssignal

$$U_D = K_D \cdot \omega_{mz}(t, \tau) \quad . \qquad (XIV)$$

Infolge der stochastischen Modulation des Laserlichtes treten Schwankungen im Diskriminatorausgangssignal auf mit einem quadratischen Zeitmittelwert:

$$\overline{\left[ U_D (t, \tau) \right]^2} \sim \overline{\left[ \omega_{mz}(t, \tau) \right]^2} = 2 \left[ \phi_{\omega_m}(0) - \phi_{\omega_m}(\tau) \right] \quad (XV)$$

$\phi_{\omega_m}$ ist hierbei die Autokorrelationsfunktion (AKF) der Frequenzschwankung des stochastisch modulierten Laserlichtes.

Durch Einführung der normierten AKF

$$\phi_{\omega_m}^* = \phi_{\omega_m}(\tau) \Big/ \phi_{\omega_m}(0) \qquad (XVI)$$

und der Streuung $\sigma_{\omega_m}^2$ (=Quadrat des Effektivwertes der Frequenzabweichung von $\Omega_o$) entsprechend GI. XIII

$$\sigma_{\omega\, m}^2 = \overline{\left[ \omega_m(t) \right]^2} = \phi_{\omega_m}(0) \qquad (XVII)$$

ergibt sich aus G1. XV

$$\overline{\left[ \omega_{mz}(t, \tau) \right]^2} = 2\, \sigma_{\omega_m}^2 (t) \left\{ 1 - \phi_{\omega_m}^* (\tau) \right\} \qquad (XVIII)$$

Nachfolgend wird angenommen, daß die Mischfrequenz $\omega_{mz}$, wie ihre Komponenten $\dot{R}(t)$, $\dot{R}(t-\tau)$, einen Gaußschen Prozeß mit verschwindendem Mittelwert repräsentiert. Bekanntlich gilt für das Verhältnis von Effektivwert $\tilde{u} = \sqrt{\overline{u^2}}(t)$ zum zeitlichen Mittel des Betrages $\overline{|u(t)|}$ eines normalverteilten Signals u (t) mit dem Mittelwert Null

$$\frac{\tilde{u}}{\overline{\sqrt{u(t)}}} = \sqrt{\frac{\pi}{2}} \simeq 0{,}798 \qquad (XIX)$$

-8-

Somit wird das Quadrat des Effektivwertes der Mischfrequenzschwankungen:

$$\overline{[\omega_{mz}(t,\tau)]^2} = \frac{\pi}{2}\left(\overline{|\omega_{mz}(t,\tau)|}\right)^2 \tag{XX}$$

Einsetzen dieser Beziehung in G1. XVIII liefert

$$\overline{|\omega_{mz}|} = \frac{2}{\sqrt{\pi}}\ \sigma_{\omega_m} \cdot \sqrt{1-\phi^*_{\omega_m}(\tau)} \tag{XXI}$$

Es ist offensichtlich, daß $\overline{|\omega_{mz}|}$ als zeitliches Mittel
der absoluten Frequenzdifferenz $|\omega_m-\omega_z|$ nach Fig.1 eine
direkt meßbare Größe ist, denn am Ausgang des Photomischers 14 sind wegen der Homodyn-Überlagerung der Laserstrahlen nur elektrische Signalfrequenzen mit dem Betrag der momentanen Frequenzabweichungen der Lasersignale vorhanden. Der Mittelwertbildner 18 liefert daher
ein Signal

$$\overline{|U_D(t)|} = K_D\overline{|\omega_{mz}(t)|} \tag{XXII}$$

welches der linken Seite von G1. XXI direkt proportional
ist.

Mit

$$\tau = 2A/c + 2A_0/C \tag{XXIII}$$

A, $A_0$ = Abstand des Zieles 12 bzw. des Reflektors 13 vom
Lichtdurchstoßpunkt am Strahlteiler 11 folgt somit die gesuchte Zielentfernung A aus G1. XXI
formal zu:

$$A = \frac{c}{2}\ \ln\left\{\phi_{\omega_m}(\tau)\right\} - A_0 \tag{XXIV}$$

wobei

$$\phi^*_{\omega_m}(\tau) = 1 - \frac{\pi}{4}\ \frac{(\overline{|\omega_{mz}|})^2}{\sigma_{\omega_m}{}^2} \tag{XXV}$$

Die Gln.XXIV und XXV bzw. XXI definieren die Meßgleichungen für den Laser-Entfernungsmesser mit stochastischer Frequenzmodulation und homodynem Überlagerungsempfang.

Alle diese Gleichungen sagen aus, daß die unbekannte Zielentfernung A ermittelt werden kann, wenn der Verlauf der Autokorrelationsfunktion $\phi_{\omega_m}(\tau)$ und die Streuung $\sigma_{\omega_m}^2$ der Frequenzschwankungen des Laserlichtes bekannt und der Abstand $A_0$ des Reflektors 13 vom Strahlteiler 11 vorgegeben ist, Die Größe $\overline{|\omega_{mz}|}$ repräsentiert hierbei die sog. Hortonsche Antikorrelationssfunktion/ 2 /.

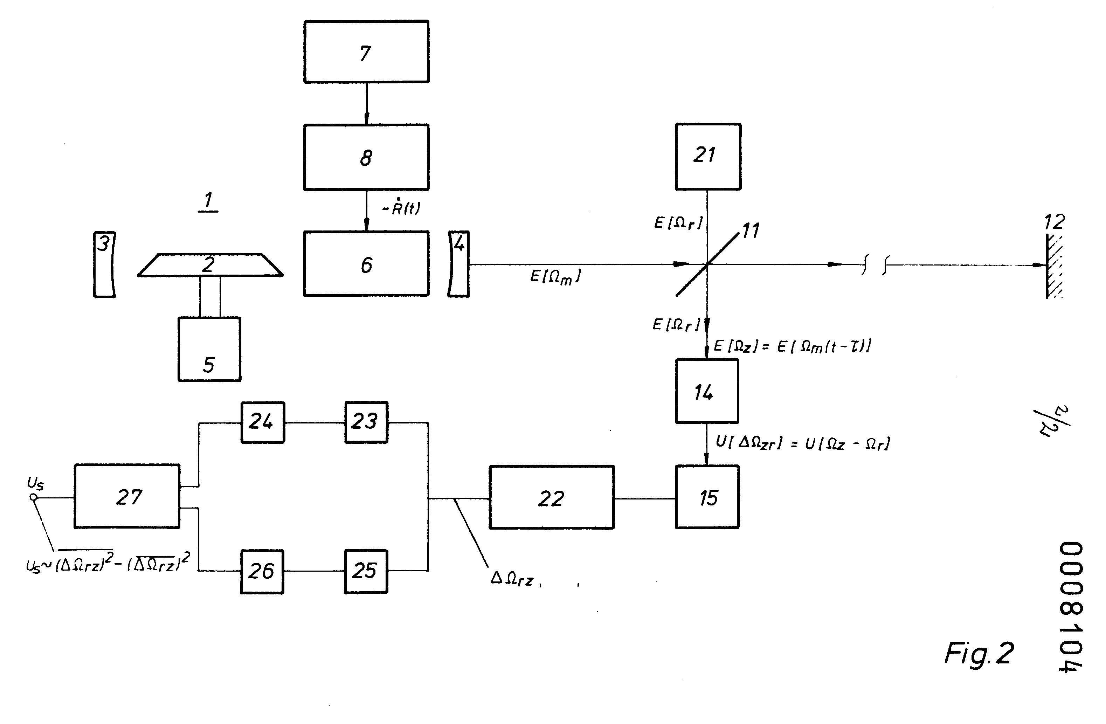

$\int$ Beim Ausführungsbeispiel gemäß Fig.2 befindet sich der Phasenmodulator 6 innerhalb des Laserresonators 2,3,4. An dem Modulationseingang des Phasenmodulator ist über ein Formfilter 8 wiederum ein Rauschgenerator 7 angeschlossen. Da bei resonatorinterner Rauschmodulation eine Phasenmodulation zugleich eine Frequenzmodulation des Lasersignals bedeutet, entfällt hier der Integrator 9.

Bei diesem Ausführungsbeispiel arbeitet der Empfangsteil nach dem Heterodyn-Prinzip und ist zu diesem Zweck mit einem Referenzoszillator 21 ausgestattet, der sein Signal $E[\Omega_r]$ durch den Strahlenteilerspiegel 11 hindurch auf den Photodetektor 14 strahlt. Das rauschmodulierte Ausgangssignal $E[\Omega_m]$ des Senders durchläuft ebenfalls den Strahlenteilerspiegel 11 und wird vom Ziel 12 reflektiert. Der Spiegel 11 lenkt es auf den Photodetektor 14 ab, wo es mit dem Signal des Ortsoszillators überlagert wird. Für die unmodulierte Signalfrequenz $\Omega_s$ des Senderoszillators, seine modulierte Signalfrequenz $\Omega_m$ , die Signalfrequenz $\Omega_r$ des Referenzoszillators und die hieraus abgeleiteten Mischfrequenzen $\Delta\Omega_{rz}$ und $\Delta\Omega_{sr}$ ergeben sich folgende Beziehungen:

$$\Omega_r = \Omega_s + \Delta\Omega_{sr} \tag{XXVI}$$

$$\Omega_m = \Omega_s + \dot{R}(t) \tag{XXVII}$$

$$\Delta\Omega_{rz} = \Delta\Omega_{sr} + \dot{R}(t-\tau), \quad \Delta\Omega_{sr} = \Omega_s - \Omega_r \tag{XXVIII}$$

-1o-

An den Photodetektor ist über einen Breitbandverstärker 15 ein Frequenzzähler 22 angeschlossen, an den sich eine Schaltungsanordnung zur Mittelwertbildung anschließt, die aus zwei parallelen Signalkanälen mit einem nachgeschalteten Subtrahierer 27 besteht. In dem einen Signalkanal ist vom Frequenzzähler 22 ausgehend einem Quadrierer 23 ein Mittelwertbildner 24 nachgeschaltet, so daß das Mischfrequenzsignal $\Delta\Omega_{rz}$ zunächst quadriert und hieraus anschließend der Mittelwert $\overline{(\Delta\Omega_{rz})^2}$ gebildet wird. Im anderen Kanal ist an den Frequenzzähler zunächst ein Mittelwertbildner 25 angeschlossen, dem eine Quadrierstufe 26 nachgeschaltet wird. Hier wird also zunächst der Mittelwert $\overline{\Delta\Omega_{rz}}$ des Mischfrequenzsignals gebildet und dieser anschließend zum Signal $\left(\overline{\Delta\Omega_{rz}}\right)^2$ quadriert. Der Subtrahierer 27 bildet die Differenz der am Ausgang der beiden Signalkanäle auftretenden quadratischen Mittelwertsignale, also

$$U_S = \overline{(\Delta\Omega_{rz})^2} - \left(\overline{\Delta\Omega_{rz}}\right)^2 \qquad (XXIX)$$

Auf diese Weise erhält man aus Gleichung XVIII die Beziehung der normierten Autokorrelationsfunktion AKF und der Streuung, wenn man in diese Gleichung auf der linken Seite die Beziehung

$$\overline{[\omega_{mz}(t,\tau)]^2} = \overline{(\Delta\Omega_{rz})^2} - \left(\overline{\Delta\Omega_{rz}}\right)^2 \qquad (XXX)$$

einsetzt. Diese Gleichung beschreibt das Meßverhalten des rauschmodulierten Laserentfernungsmessers bei Verwendung eines heterodynen Empfangssystems.

Um ein für eine hohe Störfestigkeit des Laserentfernungsmessers günstiges Signal/Rauschverhältnis zu erreichen, empfiehlt es sich, die Ausgangsleistung des Rauschgenerators 7 soweit zu erhöhen, daß der elektrooptische Modulator 6 innerhalb seiner Linearitätsgrenzen voll ausgesteuert wird und eine große Modulationsleistung $P_R$ verfügbar ist. Eine weitere Möglichkeit zur Erhöhung des Signal/Rauschverhältnisses bietet der Einsatz eines aktiv frequenzstabilisierten Laseroszillators mit resonatorexternem Modulator (Fig.1), wodurch die Störleistung $P_0$ des natürlichen Frequenzrauschens des Laserlichtes reduziert wird. Eine Anhebung des Signal/ Rauschverhältnisses ist ferner möglich, wenn durch das Formfilter 8 im Modulationskanal die spektrale Verteilung des Signals R(t) so vorgegeben wird, daß eine selektive Filterung der Modulationsinformation $\Delta_\tau \bar{R}$ im Empfangskanal durch das Filter 17 durchgeführt werden kann. Hier ist ggf. Voraussetzung, daß der spektrale Verlauf $\dot{S}_e(\omega)$ der Störleistung, d.h. das Spektrum der natürlichen Frequenzmodulation des Laserlichts, bekannt ist. Für ein günstiges Signal/Rauschverhältnis ist es zweckmäßig, das Formfilter 8 im Modulationskanal als Bandfilter auszubilden, so daß die modulierende Rauschleistung in einem begrenzten Frequenzintervall auftritt. Wählt man die untere Grenzfrequenz dieses Bandpaßfilters so hoch, daß das Maximum der Störleistung außerhalb des Filterdurchlaßbereiches liegt, so erreicht man durch ein entsprechend angepaßtes Filter 17 im Empfangskanal günstige Signal/ Rauschverhältnisse. Bei hinreichend großer Mittenfrequenz des Filters liegt nur noch ein kleiner Bruchteil der Störleistung im Filterdurchlaßbereich.

Ein hohes Signal/Rauschverhältnis läßt sich erreichen, wenn die Halbwertsbreite $\Delta\Omega$ des Laserlichts hinreichend klein ist. Hierzu empfiehlt sich die Verwendung eines aktiv frequenzstabilisierten Lasers. Das Signal/Rauschverhältnis verbessert sich mit steigender Mittenfrequenz $\omega_m$ des Bandfilters und ist näherungsweise unabhängig von dessen Durchlaßbreite $\Delta\omega_m$. Es ist von

Vorteil, wenn das Verhältnis von Rauschbandbreite $\Delta\omega_m$ zur Bandbreite $\Delta\omega$ des unmodulierten Trägers möglichst groß gewählt wird. In jedem Fall ist die Ausbildung des Formfilters 8 als Bandpaß hier wesentlich günstiger als das im Stand der Technik bei einem Mikrowellen-Entfernungsmesser mit Rauschmodulation verwendete Tiefpaß-Formfilter. Mit tiefpaßgefiltertem Rauschen können die Abstände sehr naher Objekte genau gemessen werden. Bei bandpaßgefiltertem Rauschen wächst dagegen die Auflösung mit zunehmenden Zielabstand und erreicht ein Maximum bei der 1.Nullstelle der Autokorrelationsfunktion.

Eine Vergrößerung des Eindeutigkeitsbereiches und damit der maximalen Meßentfernung $A_{max}$ ist realisierbar mit einem Meßsystem, bei dem mit zwei oder mehreren Filtern unterschiedlicher Mittenfrequenz $\omega_{m1}$, $\omega_{m2}$, .... im Modulations-$8_1$,$8_2$ bzw. Empfangskanal $17_1$, $17_2$, gearbeitet wird. Die Filter werden zeitlich nacheinander oder parallel in den Kanal geschaltet und der zugehörige Wert $|\omega_{m2}|_1$, $|\omega_{m2}|_2$,.... des Ausgangssignals bestimmt. Wenn der Zielabstand größer ist als $A_{max}$, ergibt sich wegen der Mehrdeutigkeit der Autokorrelationsfunktionen $\phi\omega_{m1}$, $\phi\omega_{m2}$, $\phi\dot{R}_1$, $\phi\dot{R}_2$ , für jeden Meßwert eine Folge von denkbaren $\tau$-Werten $\tau_{11}$, $\tau_{12}$... bzw. $\tau_{31}$, $\tau_{22}$ ··· Es gibt jedoch einen $\tau$- Wert, der in allen Folgen vorkommt. Dieser stellt das Meßergebnis dar.

Hinsichtlich der Wahl eines internen oder externen Modulationsverfahrens ist zu bemerken, daß für einen vorgegebenen Frequenzhub die interne Modulation des Laseroszillators vergleichweise niedrige Modulationsspannungen benötigt, beispielsweise in der Größenordnung von einigen 1oV, gegenüber einigen $10^3$V bei externer Modulation. Jedoch ist bei allen internen Modulationsverfahren die modulierende Frequenz bzw. die Modulationsbandbreite infolge der hohen Güte des Laserresonators nach oben beschränkt. Bei externer Modulation hingegen ist die erreichbare Bandbreite vorrangig durch die Auslegung des Modulators bestimmt. Mit elektrooptischen Kristallen können Grenzfrequenzen in der Größenordnung von $10^9$Hz erreicht werden. Dabei ist zu beachten, daß elektrooptische Modulatoren nicht nur eine obere sondern häufig auch eine untere Grenzfrequenz haben.

Zum Überlagerungverfahren auf der Empfgangsseite ist zu bemerken, daß der gerätetechnische Aufwand beim heterodynen System insbesondere wegen des erforderlichen Referenzoszillators und die aufwendigere Auswerteelektronik bestehend aus Frequenzzähler und zweikanaligem Mittelwertbildner größer ist als beim homodynen System. Von Bedeutung kann auch sein, welchen Einfluß durch Bewegungen des Ziels hervorgerufene Frequenzverschiebungen auf das Meßergebnis haben. Beim Homodynempfang kann wegen der Betragsbildung das Vorzeichen der entstehenden Dopplerfrequenz verloren gehen, während das heterodyne System eine Ermittlung der Doppelverschiebung nach Betrag und Vorzeichen gestattet, wenn man beispielsweise am Ausgang des Mittelwertbildners 25 das Signal $\overline{\Delta\Omega_{rz}}$ abgreift. Für die Dopplerverschiebung gilt

$$\Delta\Omega_d = \overline{\Delta\Omega_{rz}^*} - \overline{\Delta\Omega_{rz}} = \dot{R}(t-\tau) + \overline{\Delta\Omega_d} \qquad (XXXI)$$

Hierin bedeuten $\overline{\Delta\Omega_{rz}^*}$ den Istwert und $\overline{\Delta\Omega_{rz}}$ den Sollwert der zeitlich gemittelten Mischfrequenzen. Von Vorteil ist, daß beim heterodynen System das Ausgangssignal des Subtrahierers 27 gemäß Gleichung XXX durch die Dopplerverschiebung $\Delta\Omega_d$ nicht verfälscht wird und damit nicht zusätzlich korrigiert werden muß.

0008104

(1) Lange, F.H.        "Signale und Systeme" Band 3 –
                       Regellose Vorgänge
                       VEB Verlag Technik, Berlin 19
                       Seiten 339-342

(2) Horton, B.M.       "Noise modulated Distance
                       measuring Systems"
                       IRE 47, 5, 821 (1959)

Patentansprüche:

1. Entfernungs- und Geschwindigkeitsmeßeinrichtung mit einem in seiner Frequenz rauschmoduliertem Sender sowie einem Empfänger, welcher außer einer Mischstufe zum Mischen der vom Ziel reflektierten Signale mit einem Bezugssignal einen nachgeschalteten Frequenzdiskriminator oder Frequenzzähler und eine an diesen angeschlossene Schaltungsanordnung zur Mittelwertbildung umfaßt, d a d u r c h   g e k e n n z e i c h - n e t, daß als Sender ein Laser (1) und als Empfangsmischstufe ein Photodetektor (14) dient, an dessen Ausgang der Frequenzdiskriminator (16) bzw. der Frequenzzzähler (22) angeschlossen ist.

2. Einrichtung nach Anspruch 1, d a d u r c h   g e- k e n n z e i c h n e t, daß der Modulator (6) außerhalb des Laserresonators (2,3,4) angeordnet ist (Fig.1).

3. Einrichtung nach Anspruch 1, d a d u r c h   g e- k e n n z e i c h n e t, daß der Modulator (6) innerhalb des Laserresonators (2,3,4) angeordnet ist (Fig.2).

4. Einrichtung nach Anspruch 2 oder 3, d a d u r c h   g e k e n n z e i c h n e t, daß im Modulationska- nal zwischen Rauschgenerator (7) und Modulator (6) ein Formfilter (8) eingeschaltet ist.

5. Einrichtung nach Anspruch 4, d a d u r c h   g e- k e n n z e i c h n e t, daß das Formfilter (8) als Tiefpaß- oder als Bandpaßfilter ausgebildet ist.

6. Einrichtung nach Anspruch 2, d a d u r c h   g e - k e n n z e i c h n e t, daß zwischen Formfilter (8) und Modulator (6) ein Integrator (9) eingeschaltet ist.

7. Einrichtung nach einem der Ansprüche 1 - 6, d a - d u r c h   g e k e n n z e i c h n e t, daß als Bezugssignal ein mittels eines Strahlteilers (11) aus dem frequenzmodulierten Sendersignal abgeleitetes Signal dient (Fig. 1).

8. Einrichtung nach Anspruch 7, d a d u r c h   g e - k e n n z e i c h n e t, daß das vom Ziel (12) reflektierte Signal mittels des Strahlteilers (11) auf einen in vorgegebenem Abstand ($A_o$) angeordneten Reflektor (13) und von diesem auf den Photodetektor (14) geworfen wird.

9. Einrichtung nach Anspruch 7, d a d u r c h   g e - k e n n z e i c h n e t, daß das aus dem Sendersignal abgeleitete Bezugssignal mittels des Strahlteilers (11) auf einen in vorgegebenem Abstand ($A_o$) angeordneten Reflektor (13) und von diesem auf den Photodetektor (14) geworfen wird.

10. Einrichtung nach einem der Ansprüche 7 bis 9, d a - d u r c h   g e k e n n z e i c h n e t, daß zwischen Frequenzdiskriminator (16) und Mittelwertbildner (18) ein dem Formfilter (8) angepaßtes Filter (17), vorzugsweise ein Tiefpaß- oder Bandpaßfilter, eingeschaltet ist.

11. Einrichtung nach einem der Ansprüche 1 bis 6, d a - d u r c h   g e k e n n z e i c h n e t, daß das Bezugssignal durch einen Referenzoszillator (21) erzeugt wird und als Frequenzdiskriminator ein Frequenzzähler (22) dem Photodetektor (14) nachgeschaltet ist (Fig.2).

12. Einrichtung nach Anspruch 11, d a d u r c h   g e - k e n n z e i c h n e t, daß die Schaltungsanordnung zur Mittelwertbildung aus zwei parallelen Signalkanälen mit nachgeschaltetem Subtrahierer (27) besteht, wobei im einen Kanal einem Quadrierer (23) ein Mittelwertbildner (24) und im anderen Kanal einem Mittelwertbildner (25) ein Quadrierer (26) jeweils für die Mischfrequenz ( $\Delta\Omega_{rz}$ ) nachgeschaltet ist.

13. Einrichtung nach Anspruch 11 und 12, d a d u r c h  g e k e n n z e i c h n e t , daß hinter dem Frequenzzähler (22) und vor der Schaltungsanordnung zur Mittelwertbildung (23-27) ein an das Formfilter (8) angepaßtes Signalfilter angeschlossen ist.

14. Einrichtung nach einem der Ansprüche 1 bis 12, d a - d u r c h   g e k e n n z e i c h n e t , daß zwischen Photodetektor (14) und Frequenzdiskriminator (16,22) ein selektiver Verstärker (15) eingeschaltet ist.

15. Einrichtung nach einem der Ansprüche 1 bis 14, d a - d u r c h   g e k e n n z e i c h n e t , daß mit zwei oder mehr Filtern im Modulationskanal ($8_1$, $8_2$...) und im Empfangskanal ($17_1$ $17_2$..) zeitlich nacheinander oder simultan gearbeitet wird, wobei die Mittenfrequenz innerhalb jedes Filtersatzes ($8_1$, $8_2$...) bzw. ($17_1$, $17_2$...) sich unterscheiden und die einander zugeordneten Filter im Modulations- und Empfangskanal (z.B. $8_1$ und $17_1$) gegenseitig angepaßt sind.

16. Einrichtung nach einem der Ansprüche 11 bis 15, d a - d u r c h   g e k e n n z e i c h n e t , daß am Ausgang des Mittelwertbildners (25) als geschwindigkeitsproportionales elektrisches Signal die optische Dopplerfrequenzverschiebung bei Bewegungen des Zieles (12) abgegriffen wird.

17. Einrichtung nach einem der Ansprüche 1 bis 15, d a - durch gekennzeichnet, daß der Modulator zeitlich intermittierend betrieben wird und am Ausgang des Mittelwertbildners (18,25) zwischenzeitlich die Doppelfrequenzverschiebung als geschwindigkeitsproportionales Signal gemessen wird.

18. Einrichtung nach Anspruch 1 bis 1o und 17, d a - d u r c h  g e k e n n z e i c h n e t, daß die optische Dopplerfrequenzverschiebung für zwei verschieden polarisierte Signalfrequenzen ($\Omega_0$, $\Omega_1$) des Laseroszillators (2-5) gemessen wird und mittels Speicher und Subtrahierer zur Fehlerermittlung des Entfernungsmeßsignales am Ausgang (18) der Meßeinrichtung benutzt wird.

19. Einrichtung nach einem der Ansprüche 1 bis 18, d a - d u r c h  g e k e n n z e i c h n e t, daß die hinter dem Photodetektor (14) stattfindende Signalverarbeitung durch die nachfolgenden Übertragungsglieder (15-18 bzw. 22-28) analog, digital oder hybrid durchgeführt wird.

Fig. 1

Honeywell

Fig.2

**Europäisches Patentamt**

## EUROPÄISCHER RECHERCHENBERICHT

| | EINSCHLÄGIGE DOKUMENTE | | KLASSIFIKATION DER ANMELDUNG (Int.Cl. ³) |
|---|---|---|---|
| Kategorie | Kennzeichnung des Dokuments mit Angabe, soweit erforderlich, der maßgeblichen Teile | betrifft Anspruch | |
| | DE - A - 2 012 946 (PHILIPS) <br> * Seite 3, Zeile 3 bis Seite 5, Zeile 7; Seite 8, Zeile 14 bis Seite 9, Zeile 13; Seite 10, Zeilen 7-18; Figuren 1 und 2 * <br> -- | 1,7-9, 18 | G 01 S 17/32 <br> 17/58 |
| | FR - A - 2 374 652 (DECCA) <br> * Seite 7, Zeile 20 bis Seite 10, Zeile 13; Figur 5 * <br> -- | 1,2,7, 8 | |
| | US - A - 3 733 129 (W.B. BRIDGES) <br> * Spalte 3, Zeilen 20-50; Figur 1 * <br> -- | 3 | RECHERCHIERTE SACHGEBIETE (Int. Cl. ³) <br><br> G 01 S 17/02 <br> 17/08 <br> 17/32 <br> 17/50 <br> 17/58 <br> 13/32 |
| | US - A - 3 731 103 (Th.R. O'MEARA) <br> * Spalte 1, Zeile 26 bis Spalte 8, Zeile 41; Figuren 1-4 * <br> -- | 1,2,11, 14,15 | |
| | US - A - 4 059 052 (P.R. KARR) <br> * Spalte 2, Zeile 65 bis Spalte 3, Zeile 25; Figur 1 * <br> -- | 1,4-6, 14 | |
| | US - A - 3 781 864 (B.M. HOPTON) <br> * Das ganze Dokument * <br> ---- | 1,4-6, 15 | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze <br> E: kollidierende Anmeldung <br> D: in der Anmeldung angeführtes Dokument <br> L: aus andern Gründen angeführtes Dokument <br> &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 02-11-1979 | VAN WEEL |

EPA form 1503.1  06.78